# EUROPEAN PATENT SPECIFICATION

(11) **EP 1 137 561 B1**
(45) Date of publication and mention of the grant of the patent: **27.09.2006**
(21) Application number: 99960072.9
(22) Date of filing: 26.11.1999
(51) Int. Cl.: B60T 7/10

(54) **A HAND OPERATED BRAKE**
HANDBREMSE
FREIN A MAIN

(30) Priority: 08.12.1998 SE 9804254
(43) Date of publication of application: 04.10.2001
(73) Proprietor: Liko Research & Development AB, 975 92 Lulea (SE)
(72) Inventor: LILJEDAHL, Gunnar, S-975 93 Lulea (SE)
(74) Representative: Billberg, Hans
(86) International application number: PCT/SE1999/002208
(87) International publication number: WO 2000/034095

(56) References cited:
- EP-A1- 0 882 646

## Description

This invention relates to an arrangement at hand-operated brakes consisting of a handle, which is pivoting in a pivot of a support, which handle, at a distance from the pivot, has a point of attachment for one end of a wire, which is surrounded by a tubular cover, the other end of the wire actuating a brake device.

A hand-operated brake device of this type is disclosed in SEA-9200906-7, which hand-operated brake can be said to have two functions, one being a normal braking by pulling the handle and the second being a parking brake function when the handle instead for being pulled, is pushed from a neutral position to a fixed position. The known arrangement is of a somewhat complicated design because it demands more than one lever to make the two functions possible. It is an object of this invention to make the two brake functions possible by means of one and the same lever. The inventive idea is thereby that the normal braking is carried out by pulling the wire by means of the handle while when operating the parking brake function, the wrapping surrounding the wire is actuated.

Document EP-A- 0 882 646 discloses a hand-operated brake consisting of handle, includling a parking make facility.

The characterizing features of the invention are stated in the enclosed claims.

An embodiment of the invention will now be described with reference to enclosed drawings.

Fig. 1 is hereby a longitudinal section through a device according to the invention when the handle is in its neutral position.

Fig. 2 is the same as figure 1 but the handle is pulled for braking.

Fig. 3 is the same as the foregoing figures but the handle is in parking brake position.

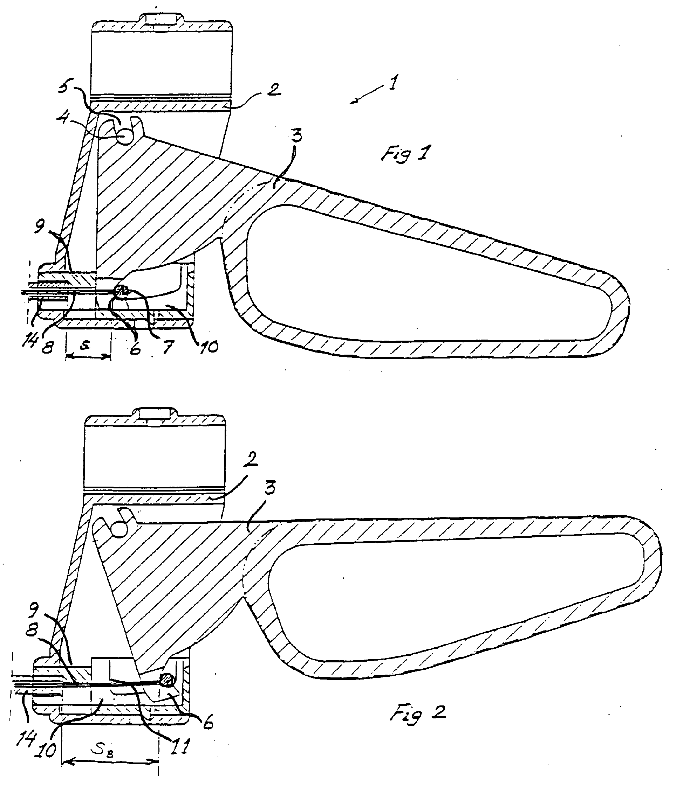

In fig. 1 the device according to the invention is generally indicated by 1. The device can be said to be a hand-operated device for operating a brake of a bike, walking chair or the same. The device includes as usual a support 2, which can be fixed for instance on a not shown handle bar. The support 2 is in the form of a housing and within it there is a brake handle 3 pivotingly supported by a pivot 4, which is fixed in the support 2. As can be seen the pivot 4 co-operates with an oblong hole 5 in the brake handle 3. The extension of the oblong hole is mainly downwards towards a point of attachment 6 for the end 7 of a wire. This will be described more in detail in the following. The point of attachment 6 is in the form of a hook so that the end 7 of the wire can be detached.

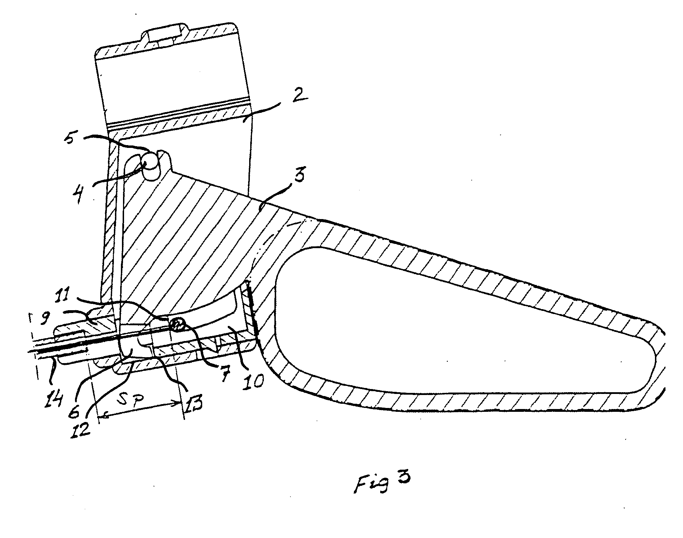

A brake wire 8 and its surrounding tubular cover 14 actuates the not shown brake. This is accomplished in known manner by that the wire 8 is pulled into the support 2 by that the handle is pivoted around the pivot 4 while the two ends of the tubular cover are fixed. The end of the tubular cover 14 bears on stop means 9, which is movable backwards and forwards in the support 2. This motion for the stop means 9 into the support 2 is delimited by the left side of a shoulder part 10, see fig. 2. The shoulder part 10 is fixed in relation to the support 2. The shoulder part 10 preferably has a support face in the form a curved surface 11, which matches the hook 6 of the brake handle when it is its neutral position. More of this will be described in connection with fig. 3.

The hand-operated brake is operated in conventional manner by that the handle 3 is pulled upwards and is hereby pivoting with the oblong hole 5 around the pivot 4, whereby the hook 6, in the opposite end of the handle, is moved to the right in fig. 2. The wire 8 is hereby hauled while the tubular cover 14 remains steady against the stop means 9 which remains fixed in relation to the support 2 by means of the shoulder part 10.

Fig. 3 discloses the device in its parking brake position. In this position the brake handle 3 has been pushed downwards and thus been swinged in opposite direction in relation to what is shown in fig. 2 around the pivot 4. Due to the oblong hole 5 the handle 3 has also been moved downwards in the support 2 and the hook 6 has been displaced into a recess 12 and bears with its tip 13 on the left side of the shoulder part 10. The handle 3 is hereby detachably locked in the position in fig. 3 by means of a snap in operation.

Simultaneously with the turning of the handle 3 to the position shown in fig. 3, the left side of the hook 6 pushes the stop means 9 in the direction out from the support 2, to the left, to a new end position. The tubular cover 14 of the wire is hereby also pushed out of the support 2 and a relative displacement is carried out between the wire 8 and the tubular cover 14 because the wire end 7 will be catched by the curved surface 11 of the shoulder part 10. The position of the end of the wire is hereby the same as in the neutral position according to fig. 1. When later the parking brake shall be released, the handle 3 is pulled upwards, whereby the interference of the tip 13 of the hook 6 with the shoulder part 10 is detached and the hook 6 will again catch the end 7 of the wire in the manner shown in fig. 1 and due to the tension of the wire the stop means 9 will be pushed into the support 2 to the position shown in fig. 1, that is to say the stop means 9 will bear on the left side of the shoulder part 10.

A preferred embodiment of the invention has been described above. Within the spirit of the invention there are some variations. Thus, the stop means 9 can be designed otherwise. The inner end position can be in the form of a shoulder of the stop means 9, which co-operates with the support 2 on its outside. The movement of the stop means 9 out of the support 2 can be performed indirectly by the hook 6. The snap-in operation can be carried out by that no displacement of the handle takes place in the pivot 4, 5 but that the handle by some other part is locked to the support 2 by a different snap-in means.

## Claims

1. A hand-operated brake consisting of a handle (3), which is pivoting to and from a neutral position in a pivot (4, 5) of a support (2), which handle (3) has a point of attachment (6) at a distance from the pivot (4, 5) for catching one end of a wire (8), which is surrounded by a tubular cover (14), and the other end of which actuates a brake device, **characterized in that** the end of the tubular cover (14), which is directed towards the point of attachment (6), bears on a stop means (9), which is movable within the support (2), between two end positions, of which one is determined by a first shoulder part (10), which is fixed in relation to the support (2) and hereby determines the position of the end of the tubular cover (14) in relation to the support (2) when swinging the handle (3) in order to pull the wire (8) into the support (2) for braking, and the second one, intended for carrying out the parking brake function, is determined by a second shoulder part (6), which forms a part of the handle (3) and locates the second end position a certain distance from the first end position in the direction out of the support (2), when the handle (3) is pivoted from the neutral position in opposite direction in relation to the direction when pulling the wire (8), whereby the end (7) of the wire (8) simultaneously is fixed against being pulled into the tubular cover (14), in a position which corresponds to the position when the handle is in neutral position by a stop (11), which is fixed in relation to the support (2) and that hereby the handle (3) is detachably locked by means of a snap-in means (13).

2. Hand-operated brake according to claim 1, **characterized in that** the pivot (4, 5), besides permitting the handle to pivot in the support, also permits a displacement of the handle (3) in direction towards the point of attachment (6) and that the support (2) has a stop means (13), in which a part of the handle (6) engages by the displacement and hereby prevents the handle to be swinged in the direction for pulling the wire into the support.

3. Hand-operated brake according to claim 1, **characterized in that** the point of attachment (6) is a first hook (6) and that the stop means (11) for the wire is a second hook, which is fixed in relation to the support (2) and actuates in the same direction as the first hook (6).

4. Hand-operated brake according to preceding claims, **characterized in that** the part of the handle (3), which co-operates with the support (2) is triangular and in one corner has an oblong hole (5), which forms the pivot together with a pin (4) in the support (2) and that the first hook (6) is formed in the opposite corner of the handle and whereby the second opposite corner has an extension which forms the grip of the handle.

5. Hand-operated brake according to preceding claims, **characterized in that** the second hook (11) forming the stop for the wire (8) has a face which is opposite to the opening of the hook, which face forms the first end position for the stop means (9).

## Patentansprüche

1. Handbetätigte Bremse, bestehend aus einem Handgriff (3), der um eine Drehachse (4, 5) eines Trägers (2) in und aus einer neutralen Position dreht, wobei der Handgriff (3) einen Befestigungspunkt (6) an einer Entfernung von der Schwenkachse (4, 5) hat zum Erfassen eines Endes eines Kabels (8), das von einer rohrförmigen Hülle (14) umgeben ist und dessen anderes Ende eine Bremseinrichtung betätigt, **dadurch gekennzeichnet, daß** das Ende der rohrförmigen Hülle (14), das zu dem Befestigungspunkt (6) hin gerichtet ist, an einer Anschlageinrichtung (9) anliegt, die innerhalb des Trägers (2) zwischen zwei Endpositionen bewegbar ist, von denen eine bestimmt ist durch einen ersten Schulterabschnitt (10), der fixiert ist in Bezug auf den Träger (2) und damit die Position des Endes der rohrförmigen Hülle (14) in Bezug zu dem Träger (2) bestimmt, wenn der Handgriff (3) geschwungen wird, um das Kabel (8) in den Träger (2) zum Bremsen zu ziehen, und das zweite, das zum Ausführen der Parkbremsfunktion vorgesehen ist, bestimmt ist durch einen zweiten Schulterabschnitt (6), der einen Teil des Handgriffs (3) bildet und die zweite Endposition in einer gewissen Entfernung von der ersten Endposition in der Richtung aus dem Träger (2) heraus festlegt, wenn der Handgriff (3) aus der neutralen Position in eine entgegengesetzte Richtung verschwenkt wird in Bezug zu der Richtung, wenn das Kabel (8) gezogen wird, wodurch das Ende (7) des Kabels (8) gleichzeitig festgelegt wird, um nicht in die rohrförmige Hülle (14) gezogen zu werden, in einer Position, die der Position entspricht, wenn der Handgriff in neutraler Position ist durch einen Anschlag (11), der fixiert ist in Bezug zu dem Träger (2), und daß **dadurch** der Handgriff (3) lösbar verriegelt wird durch eine Einschnappeinrichtung (13).

2. Handbetätigte Bremse nach Anspruch 1, **dadurch gekennzeichnet, daß** die Schwenkachse (4, 5) nicht nur erlaubt, daß der Handgriff in dem Träger schwingt, sondern auch eine Verlagerung des Handgriffs (3) in eine Richtung zum Befestigungspunkt (6) hin erlaubt und daß der Träger (2) eine Anschlageinrichtung (13) hat, mit der ein Teil des Handgriffs (3) in Eingriff kommt durch die Verlagerung und **dadurch** verhindert, daß der Handgriff in eine Richtung verschwenkt wird, um das Kabel in den Träger zu ziehen.

3. Handbetätigte Bremse nach Anspruch 1, **dadurch gekennzeichnet, daß** der Befestigungspunkt (6) ein erster Haken (6) ist und daß die Anschlageinrichtung (11) für das Kabel ein zweiter Haken ist, der festgelegt ist in Bezug auf den Träger (2) und in die selbe Richtung wie der erste Haken (6) wirkt.

4. Handbetätigte Bremse nach einem der vorhergehenden Ansprüche, **dadurch gekennzeichnet, daß** der Teil des Handgriffs (3), der mit dem Träger (2) zusammenwirkt, dreieckig ist und in einer Ecke ein längliches Loch (5) hat, das die Schwenkachse zusammen mit einem Stift (4) in dem Träger (2) bildet, und daß der erste Haken (6) in der gegenüberliegenden Ecke des Handgriffs gebildet ist und wobei die zweite gegenüberliegende Ecke eine Ausdehnung hat, die den Griff des Handgriffs bildet.

5. Handbetätigte Bremse nach einem der vorhergehenden Ansprüche, **dadurch gekennzeichnet, daß** der zweite Haken (11), der den Anschlag für das Kabel (8) bildet, eine Fläche hat, die der Öffnung des Hakens gegenüberliegt, welche Fläche die erste Endposition für die Anschlageinrichtung (9) bildet.

## Revendications

1. Frein à main constitué par un levier (3), qui pivote de et vers une position neutre dans un pivot (4, 5) d'un support (2), lequel levier (3) comporte un point de fixation (6) à une distance du pivot (4, 5) pour saisir une extrémité d'un câble (8), qui est entouré d'une enveloppe tubulaire (14), et dont l'autre extrémité actionne un dispositif de freinage, **caractérisé en ce que** l'extrémité de l'enveloppe tubulaire (14), qui est orientée vers le point de fixation (6), appuie sur un moyen d'arrêt (9), qui peut se déplacer à l'intérieur du support (2), entre deux positions d'extrémité, dont l'une est déterminée par une première partie formant épaulement (10), qui est fixe par rapport au support (2) et qui détermine donc la position de l'extrémité de l'enveloppe tubulaire (14) par rapport au support (2) au moment du pivotement du levier (3) pour tirer le câble (8) dans le support (2) afin de freiner, et la seconde, destinée à remplir la fonction de frein de stationnement, est déterminée par une seconde partie formant épaulement (6), qui fait partie du levier (3) et qui situe la seconde position à une certaine distance de la première position d'extrémité dans la direction qui sort du support (2), lorsque le levier (3) est pivoté à partir de la position neutre dans la direction opposée à la direction dans laquelle le câble (8) est tiré, moyennant quoi l'extrémité (7) du câble (8) est fixée simultanément pour ne pas pouvoir être tirée dans l'enveloppe tubulaire (14), dans une position qui correspond à la position dans laquelle le levier se trouve dans la position neutre par une butée (11), qui est fixe par rapport au support (2), et moyennant quoi le levier (3) est verrouillé de manière détachable par un moyen à enclenchement (13).

2. Frein à main selon la revendication 1, **caractérisé en ce que** le pivot (4, 5), outre le fait de permettre au levier de pivoter dans le support, permet également un déplacement du levier (3) dans une direction orientée vers le point de fixation (6), et **en ce que** le support (2) comporte un moyen d'arrêt (13), dans lequel une partie du levier (6) est mise en prise par le déplacement et empêche donc le levier de pivoter dans la direction dans laquelle le câble est tiré dans le support.

3. Frein à main selon la revendication 1, **caractérisé en ce que** le point de fixation (6) est un premier crochet (6) et **en ce que** le moyen d'arrêt (11) pour le câble est un second crochet, qui est fixe par rapport au support (2) et dont l'actionnement se fait dans la même direction que le premier crochet (6).

4. Frein à main selon les revendications précédentes, **caractérisé en ce que** la partie du levier (3) qui coopère avec le support (2) est triangulaire et, dans un coin, présente un trou oblong (5) qui forme le pivot avec une tige (4) dans le support (2), et **en ce que** le premier crochet (6) est formé dans le coin opposé du levier, et moyennant quoi le second coin opposé comporte une extension qui forme la poignée du levier.

5. Frein à main selon les revendications précédentes, **caractérisé en ce que** le second crochet (11) qui forme la butée pour le câble (8) présente une face qui est opposée à l'ouverture du crochet, laquelle face forme la première position d'extrémité pour le moyen d'arrêt (9).
